Europäisches Patentamt

European Patent Office

Office européen des brevets

(19)

(11) Veröffentlichungsnummer : **0 175 120 B2**

(12) **NEUE EUROPÄISCHE PATENTSCHRIFT**

(45) Veröffentlichungstag der neuen Patentschrift :
05.08.92 Patentblatt 92/32

(51) Int. Cl.$^5$ : **H02H 7/26**

(21) Anmeldenummer : **85109820.2**

(22) Anmeldetag : **05.08.85**

(54) Schutzeinrichtung für ein elektrisches Netz.

(30) Priorität : **08.08.84 CH 3807/84**

(43) Veröffentlichungstag der Anmeldung :
**26.03.86 Patentblatt 86/13**

(45) Bekanntmachung des Hinweises auf die
Patenterteilung :
**19.04.89 Patentblatt 89/16**

(45) Bekanntmachung des Hinweises auf die
Entscheidung über den Einspruch :
**05.08.92 Patentblatt 92/32**

(84) Benannte Vertragsstaaten :
**CH DE GB LI SE**

(56) Entgegenhaltungen :
**EP-A- 0 084 191
CH-A- 609 487
DD-A- 112 562
FR-A- 2 435 143
ETZ-ARCHIV, Band 4, Nr. 1, 1982, Seiten 9-14;
J. SCHLABBACH et al.: "Microrechner als Distanzschutzrelais für Netze mitErdschlusskompensation"
BBC BROWN BOVERI REVIEW, Band 68, Nr.
8/9, August/September 1981, Seiten 338-347,
Baden, CH; G. BÖHME et al.: "Plantprotection
with relays from the Modures Systems"**

(56) Entgegenhaltungen :
**"Bulletin des SEV/VSE, Bd. 73 (1982) Nr. 13; E.
EGLI, "Der Kurzschluss- und Erdschluss-
Schutz des 20-kV-Netzes in demN2-Strassen-
tunnel Gotthard"; Seiten 653-658
H. CLEMENS u. K. ROTHE "Relaisschutz in
Energiesystemen"; VEB Verlag Technik Berlin, 1980; Seiten 16, 179-191, 224, 238, 260
L. MÜLLER "Selektivschutz elektrischer Anlagen"; Verlags- und Wirtschaftsgesellschaft
der Elektrizitätswerke m.b.H.-VWEWFrankfurt,
1971; Seiten 77, 78, 80, 89.
"Sammelschienenschutz" herausgegeben
von der Vereinigung Deutscher Elektrizitäts-
werke-VDEW Frankfurt; Verlags-undWirtschaftsgesellschaft der Elektrizitätswerke
m.b.H.- VWEW Frankfurt, 1977; Seiten 1-16**

(73) Patentinhaber : **BBC Brown Boveri AG
Haselstrasse
CH-5401 Baden (CH)**

(72) Erfinder : **Hager, Helmut, Dr.
Rosenstrasse 572
CH-5426 Lengnau (CH)**
Erfinder : **Kopainsky, Jürgen, Dr.
Sommerhaldenstrasse 4a
CH-5200 Brugg (CH)**
Erfinder : **Zwahlen, Kurt
Grabenmattstrasse 32
CH-5452 Oberrohrdorf (CH)**

EP 0 175 120 B2

## Beschreibung

Bei der Erfindung wird ausgegangen von einer Schutzeinrichtung für ein elektrisches Netz nach dem Oberbegriff von Patentanspruch 1.

Mit diesem Oberbegriff nimmt die Erfindung Bezug auf einen Stand der Technik von Schutzeinrichtungen für elektrische Netze, wie er etwa in CH-A5-609 487 beschrieben ist. Die bekannte Schutzvorrichtung enthält Richtungsrelais, die mit benachbart angeordneten Richtungsrelais über Pilotleitungen Richtungssignale austauschen. Die Richtungsrelais steuern jeweils einen Leistungsschalter. Diese Leistungsschalter sind in einer zweiseitig gespeisten, zwei Sammelschienen umfassenden Leitung angeordnet. Durch Öffnen von mindestens zwei dieser Leistungsschalter kann ein fehlerbehaftetes Netzteil, etwa ein Leitungsabschnitt oder ein Knotenpunkt, selektiv freigeschaltet werden.

Zu diesem Zweck enthält jedes Richtungsrelais ein Schaltungsteil, welches aus lokal im Netz erfassten Strom- und Spannungssignalen ein Richtungssignal bildet, sowie eine logische Verknüpfungsschaltung. Der Verknüpfungsschaltung werden das im Schaltungsteil gebildete Richtungssignal sowie zwei Richtungssignale zweier benachbarter Richtungsrelais zugeführt. Der Ausgang der Verknüpfungsschaltung wirkt auf den zugeordneten Leistungsschalter. Die Verknüpfungsschaltung enthält für jede von zwei möglichen Leistungsrichtungen einen Signalkanal mit jeweils einer auf den Leistungsschalter wirkende AND-Schaltung. In einer ersten dieser AND-Schaltungen wird das vom Schaltungsteil gebildete Richtungssignal mit dem von einem ersten der beiden benachbart angeordneten Richtungsrelais abgegebenen Richtungssignal logisch verknüpft, in einer zweiten dieser AND-Schaltungen wird hingegen das vom Schaltungsteil gebildete Richtungssignal nach Inversion mit dem von einem zweiten der beiden benachbart angeordneten Richtungsrelais abgegebenen Richtungssignal logisch verknüpft.

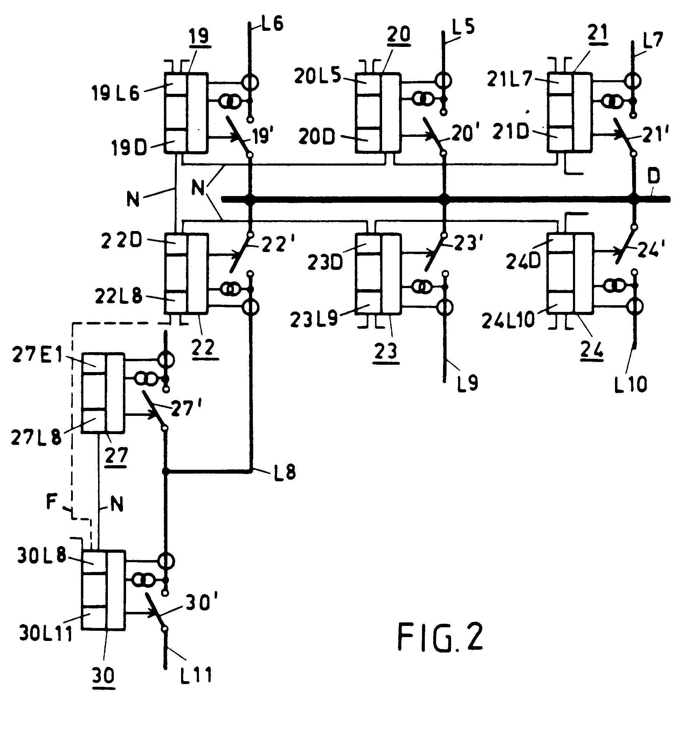

Tritt in einem von zwei benachbart angeordneten Richtungsrelais überwachten Netzteil, etwa dem in Fig.2 dargestellten Leitungsabschnitt ein Fehler auf, so erkennen die logischen Verknüpfungsschaltungen der Richtungsrelais den Fehlerort und geben an ihre zugeordneten Leistungsschalter den Befehl zum selektiven Abschalten des fehlerbehafteten Netzteils. Durch den Einbau von Zeitgliedern in die logische Verknüpfungsschaltung wird in jedem Richtungsrelais eine Sperrzeitbegrenzung eingeführt und übernimmt damit jedes Richtungsrelais auch eine gewisse Reserveschutz-Funktion. Der Reserveschutz ist dann aber nicht in jedem Fall selektiv.

Aus DD-A-112562 ist eine weitere Schutzeinrichtung für elektrische Netze bekannt, bei der die einzelnen zu schützenden Objekte im Fehlerfall über als Leistungsschalter ausgebildete Schaltstellen aus dem Netz trennbar sind. Die auftretenden Fehler werden hierbei durch fehlerrichtungsorientierte Schutzgeräte erfasst. Tritt ein Fehler innerhalb einer dem zu schützenden Objekt zugeordneten Schutzzone auf, welche im wesentlichen durch die das zu schützende Objekt aus dem Netz trennenden Schaltstellen bestimmt ist, so werden von einer dieser Schutzzone zugeordneten zentralen Auswerteeinheit Ausschaltbefehle an diese Schaltstellen erteilt. Bei Ausfall der zentralen Auswerteeinheit ist die Funktionsfähigkeit dieser Schutzeinrichtung nicht mehr gegeben.

Die Erfindung, wie sie in Patentanspruch 1 gekennzeichnet ist, löst die Aufgabe, bei einer Schutzeinrichtung der eingangs genannten Art die Redundanz und Verfügbarkeit zu erhöhen.

Die erfindungsgemässe Schutzeinrichtung ermöglicht selbst dann noch ein selektives Abschalten fehlerbehafteter Netzteile, wenn eine komponente einer Geber-Aktuator-Einheit und/oder eine Schaltstelle ausgefallen ist. Dies ist dadurch bedingt, dass jede Geber-Aktuator-Einheit jeweils zwei unabhängig voneinander arbeitende und jeweils einer von zwei verschiedenen Schutzzonen zugeordnete Auswerteeinheiten aufweist, dass diese beiden Auswerteeinheiten über eine Datenleitung zusammenschaltbar sind, und dass zudem jede dieser beiden Auswerteeinheiten jeweils mit den der betreffenden Schutzzone zugeordneten Auswerteeinheiten Daten austauschen kann. Bei Bedarf, etwa bei Ausfall irgendeiner komponente der Geber-Aktuator-Einheit und/oder der zugeordneten Schaltstelle, können die beiden Auswerteeinheiten durch Aktivierung der Datenleitung zusammengeschaltet werden. Hierbei wird eine die defekte Geber-Aktuator-Einheit und die zugeordnete, gegebenenfalls ebenfalls defekte, Schaltstelle umschliessende, vergrösserte Schutzzone gebildet, welche ein selektives Abschalten des fehlerbehafteten Netzteiles auch bei defekter Geber-Aktuator-Einheit und/oder dieser Geber-Aktuator-Einheit zugeordneter defekter Schaltstelle ermöglicht.

Die Erfindung wird nachfolgend anhand eines in der Zeichnung dargestellten Ausführungsbeispiels näher erläutert.

Hierbei zeigt:

Fig. 1 einen Ausschnitt aus einem Übersichtsschaltplan eines Energieverteilungsnetzes,

Fig. 2 einen Ausschnitt aus dem Übersichtsschaltplan gemäss Fig. 1, auf dem zusätzlich eine erfindungsgemäss ausgeführte Schutzeinrichtung mit Geber-Aktuator-Einheiten dargestellt ist,

Fig. 3 eine detaillierte Darstellung einer in Fig. 2 angegebenen Geber-Aktuator-Einheit, und

Fig. 4 ein Kommunikationsnetz einer erfindungsgemäss ausgeführten Schutzeinrichtung mit Geber-Aktuator-Einheiten, Auswerteeinheiten und Daten-Nah-und-Fernverbindungen.

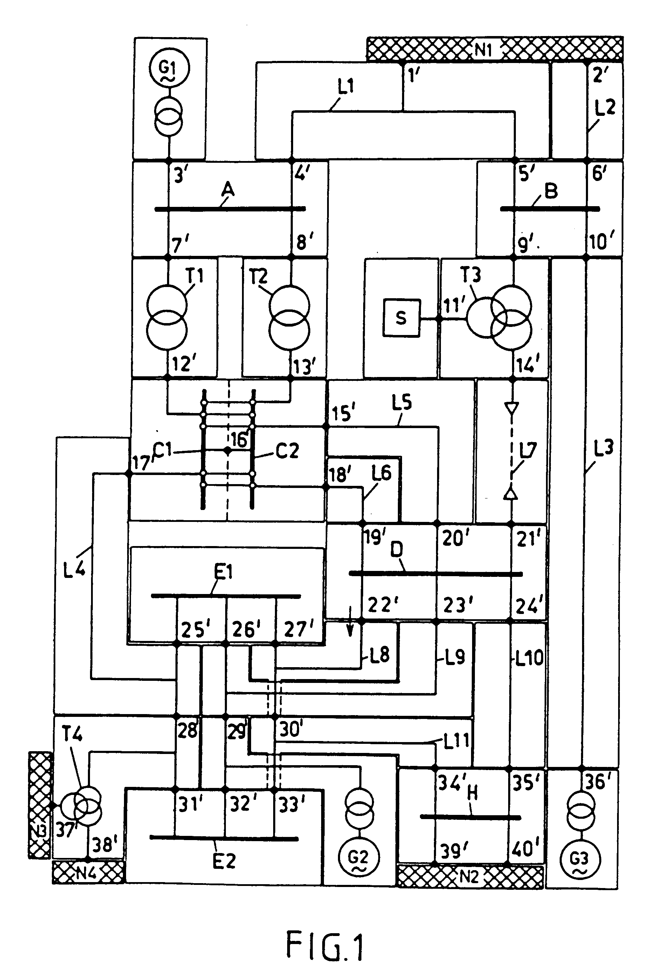

Bei dem in Fig. 1 dargestellten Energieverteilungsnetz sind zwei Spannungsebenen dargestellt.

Die erste Spannungsebene enthält zu schützende Objekte, wie Sammelschienen A und B, Leitungen $L_1$, $L_2$, $L_3$, sowie Generatoren $G_1$ und $G_3$ mit zugehörigen Blocktransformatoren. Diese Spannungsebene ist mit einem Nachbarnetz $N_1$ verbunden.

Die zweite Spannungsebene besteht aus Sammelschienen $C_1$, $C_2$, D, $E_1$, $E_2$ und H, Leitungen und Kabeln $L_4$, $L_5$, $L_6$, $L_7$, $L_8$, $L_9$, $L_{10}$ und $L_{11}$ sowie einem Generator $G_2$ mit einem zugehörigen Blocktransformator (ohne Generatorschalter). Diese Spannungsebene ist mit einem Nachbarnetz $N_2$ verbunden.

Die Spannungsebenen sind durch Transformatoren $T_1$, $T_2$ und $T_3$ verbunden. Der Transformator $T_3$ ist hierbei ein Dreiwicklungstransformator. An der Tertiärwicklung von $T_3$ ist ein Blindleistungskompensator S (rotierend oder statisch) angeschlossen. Ein weiterer Dreiwicklungstransformator $T_4$ ist mit zwei weiteren Netzen $N_3$ und $N_4$ verbunden.

Die Leitungen $L_5$ und $L_6$ bzw. $L_8$ und $L_9$ bilden jeweils eine Doppelleitung und zwei Systeme gleicher Nennspannung am selben Mast. Die Leitungen $L_3$ und $L_{10}$ werden auf der ganzen Länge von $L_{10}$ auf demselben Mast parallelgeführt und bilden eine Doppelleitung mit verschiedenen Nennspannungen.

Die Sammelschienen $C_1$ und $C_2$ sind als Doppelsammelschiene ausgebildet, bei der jeder Abzweig, wie etwa die Transformatoren $T_1$ und $T_2$ bzw. die Leitungen $L_4$, $L_5$ und $L_6$, über (in der Figur als Kreise dargestellte) Trennschalter wahlweise an jede der beiden Sammelschienen anschliessbar ist. $C_1$ und $C_2$ sind durch eine als Kuppelschalter ausgebildete Schaltstelle 16′ verbunden. Die Sammelschienen $E_1$ und $E_2$ bilden ein 11/2-Schalter-System, bei dem je eine Gruppe von zwei Abzweigen, wie etwa $L_4$ und $T_4$ bzw. $L_9$ und $G_2$ bzw. $L_8$ und $L_{11}$, über je drei als Leistungsschalter ausgebildete Schaltstellen 25′, 28′, 31′ bzw. 26′, 29′, 32′ bzw. 27′, 30′, 33′ zwischen die Sammelschienen $E_1$ und $E_2$ geschaltet sind.

Dieses Energieverteilungsnetz ist in Schutzzonen aufgeteilt. Jede dieser Schutzzonen ist einem zu schützenden Objekt, z. B. dem Generator $G_1$ oder der Sammelschiene A, zugeordnet. Die Grenzen jeder Schutzzone sind in Fig. 1 durch dünn und gerade ausgeführte Linien markiert. Die Grenzen der Schutzzonen können nach den Erfordernissen der Selektivität durch geeignete Anordnung von Schaltstellen 1′, 2′, ..., 39′, 40′ auf Verbindungen zwischen den einzelnen Objekten des Energieverteilungsnetzes bzw. an dessen Verbindungen zu anderen Netzteilen, wie etwa $N_1$ oder $N_2$ frei gewählt werden. Die Grenzen der Schutzzonen können fest sein oder können wie etwa im Falle des Schutzes der Sammelschienen $C_1$ und $C_2$ durch das Anlagenbild (Trennernachbild) gemäss der aktuellen Topologie bestimmt sein. So bestimmen beispielsweise im Falle der Sammelschienen $C_1$ und $C_2$ die Trennerstellungen die Grenzen der Schutzzone. Hierbei ist es zudem möglich, dass Sammelschienen zusätzlich durch Längstrenner oder Kupplungen weiter unterteilt werden.

Die Schutzzonen können auch hierarchisch ineinandergeschachtelt werden, um auch Zwischensystemfehler selektiv erfassen zu können. Zum Beispiel können den Doppelleitungen $L_5/L_6$ bzw. $L_8/L_9$ bzw. $L_8/L_{10}$ übergeordnete Schutzzonen zugeordnet werden, welche jeweils zwei Schutzzonen von $L_5$ und $L_6$ bzw. von $L_8$ und $L_9$ bzw. $L_3$ und $L_{10}$ umfassen und phasenselektive Abschaltungen von Fehlern zwischen zwei am selben Mast befindlichen Leitungen ermöglichen.

An den Übergängen von einer Schutzzone zu einer anderen ist genau eine Schaltstelle vorgesehen, z. B. an der gemeinsamen Grenze der Schutzzonen der Leitung $L_1$ und der Sammelschiene A die Schaltstelle 4′. Hierdurch wird die Schutzzone der Leitung $L_1$ benachbart zur Schutzzone der Sammelschiene A. Jede Schutzzone ist durch diejenigen Schaltstellen begrenzt, welche sich in den Verbindungen zwischen dem in der Schutzzone befindlichen Objekt und den benachbarten Schutzzonen befinden. Beispielsweise ist die der Sammelschiene D zugeordnete Schutzzone durch die Schaltstellen 19′, 20′, 21′, 22′, 23′ und 24′ begrenzt.

Jeder Schaltstelle 1′, 2′, ..., 40′ ist eine in Fig. 1 nicht dargestellte Geber-Aktuator-Einheit zugeordnet, welche primär die Aufgabe hat, aus Strom- und Spannungsmessungen an der Schaltstelle Fehlerrichtungssignale zu ermitteln und gegebenenfalls einen Auslösebefehl an die zugeordnete Schaltstelle zu geben. Die Geber-Aktuator-Einheiten der Schaltstellen 1′, ..., 40′ sind im wesentlichen gleichartig aufgebaut.

In Fig. 2 sind stellvertretend für diese Geber-Aktuator-Einheiten die Geber-Aktuator-Einheiten 19, 20, 21, 22, 23, 24, 27 und 30 dargestellt, welche den die Schutzzonen der Sammelschiene D bzw. der Leitung $L_8$ festlegenden Schaltstellen 19′, 20′, 21′, 22′, 23′, 24′, 27′ und 30′ zugeordnet sind. Die Schaltstelle 22′ bildet die Grenze zwischen den erwähnten Schutzzonen.

Jede der in Fig. 2 dargestellten Geber-Aktuator-Einheiten 19, 20, 21, 22, 23, 24, 27 bzw. 30 enthält der Reihe nach (durch Wandlersymbole dargestellte und nicht bezeichnete) Messwertgeber für Strom- und Spannungssignale unmittelbar vor der Schaltstelle 19′, 20′, 21′, 22′, 23′, 24′, 27′ bzw. 30′ sowie einen (durch ein Pfeilsymbol dargestellten und ebenfalls nicht bezeichneten) Aktuator, welcher auf die zugeordnete Schaltstelle wirkt. Darüber hinaus enthält jede der Geber-Aktuator-Einheiten-19; 20; 21 ; 22; 23; 24; 27 und 30 der Reihe nach genau je zwei Auswerteeinheiten 19L6, 19D; 20L5, 20D; 21L7, 21D; 22D, 22L8; 23D, 23L9; 24D, 24L10;

27E1, 27L8 und 30L8, 30L11.

Diese Auswerteeinheiten sind über ausgezogen dargestellte Datennahverbindungen N und/oder über gestrichelt dargestellte Datenfernverbindungen F mit allen Geber-Aktuator-Einheiten verbunden, welche den Schaltstellen einer Schutzzone zugeordnet sind. So sind beispielsweise die Auswerteeinheiten 21D, 20D, 19D, 22D, 23D, 24D der Geber-Aktuator-Einheiten 21, 20, 19, 22, 23, 24 der der Sammelschiene D zugeordneten Schaltstellen 21′, 20′, 19′, 22′, 23′, 24′ über Datennahverbindungen N miteinander verbunden, wohingegen die Auswerteeinheiten 22L8 und 30L8 der Geber-Aktuator-Einheiten 22 und 30 der der Leitung $L_8$ zugeordneten Schaltstellen 22′ und 30′ über eine Datenfernverbindung F miteinander verbunden sind und lediglich die Auswerteeinheiten 27L8 und 30L8 der Geber-Aktuator-Einheiten 27 und 30 der der Leitung $L_8$ zugeordneten Schaltstellen 27′ und 30′ über eine Datennahverbindung N.

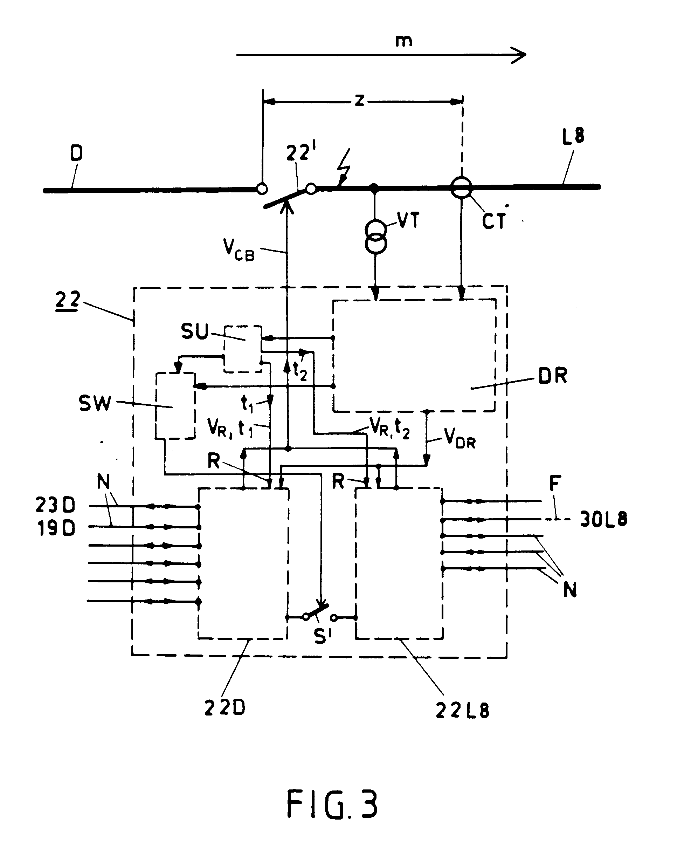

In Fig. 3 wird stellvertretend für alle gleichartig aufgebauten Geber-Aktuator-Einheiten die Geber-Aktuator-Einheit 22 näher erläutert. Diese Einheit enthält (aus Gründen der Übersichtlichkeit gestrichelt dargestellt) ein Schutzgerät DR mit Eingängen, welche phasenweise mit den Signalausgängen eines Strom- und eines Spannungswandlers CT und VT verbunden sind, die beiden Auswerteeinheiten 22D und 22L8, eine Stromüberwachungseinheit SU, eine zwischen die beiden Auswerteeinheiten 22D und 22L8 gelegte und (symbolisch als Schalter S′ bezeichnete) aktivierbare Datenverbindung sowie Datenverbindungen $V_{DR}$ und $V_{CB}$.

Hierbei sind die Meßstellen von Strom- und Spannungswandler CT und VT mit der Schaltstelle 22′ in Serie in die Verbindung zwischen Sammelschiene D und Leitung $L_8$ geschaltet. Diese Meßstellen können bezüglich der in Fig. 3 eingezeichneten Stellung auch vertauscht sein.

Die Grenze der Schutzzone ist durch die Positiön des Stromwandlers CT festgelegt. Die Strecke Z zwischen der Schaltstelle 22′ und der Meßstelle des Stromwandlers CT wird als "tote Zone" bezeichnet.

Das Schutzgerät DR ist ein Fehlerrichtungsdetektor. Der Fehlerrichtungsdetektor DR hat die Aufgabe, einen Fehler unter Angabe der betroffenen Phase sowie der Richtung dieses Fehlers bezüglich des Beobachtungsortes, d. h. bezüglich des Messortes (Strom- und Spannungswandler) festzustellen. Hierzu ist die lokale Messung von Strom und Spannung für jede Phase vor und während des Fehlers notwendig. Die Auswertung erfolgt durch geeignete Verknüpfung dieser Messwerte. Beim hier verwendeten Fehlerrichtungsdetektor werden durch Differenzbildung Sprungsignale von Strom und Spannung gebildet, aus denen sich mit Hilfe eines in den Fehlerrichtungsdetektor eingebauten Rechenwerkes die Richtung des Fehlerortes in der betreffenden Phase bezüglich des Messortes ermitteln lässt. Aufbau und Wirkungsweise solcher Fehlerrichtungsdetektoren sind beispielsweise aus der CH-A 5 642 491 sowie aus der EP-A1 0 084 191 bekannt. Es sind aber auch andere Auswertungsmethoden möglich, wie zum Beispiel spannungspolarisierte Überstromrelais, Relais mit einer Kombination von Überstrom- und Kurzschlussleistungsrichtung oder Distanzrelais.

Um bei den Geber-Aktuator-Einheiten eine definierte Messorientierung zu haben, ist bei allen Geber-Aktuator-Einheiten die Reihenfolge mit der Schaltstelle, z. B. 22′, Spannungswandler VT und Stromwandler CT in Serie in die Verbindung zwischen zwei Objekte, z. B. D und $L_8$, geschaltet sind, als Messorientierung m (vgl. Fig. 3) definiert.

Die in jeder der Geber-Aktuator-Einheiten, z. B. 22, vorgesehene Datennahverbindung $V_{DR}$ bewirkt einen Datentransport vom Fehlerrichtungsdetektor DR zu den beiden Auswerteeinheiten, z. B. 22D und 22L8, der betreffenden Geber-Aktuator-Einheit, z. B. 22, und die Datennahverbindung $V_{CB}$ den Datentransport von den beiden Auswerteeinheiten, z. B. 22D und 22L8, zu einem nicht dargestellten Betätigungsorgan der zugeordneten Schaltstelle, z. B. 22′.

Jede der Auswerteeinheiten, z. B. 22D, steht über $V_{DR}$ mit dem Schutzgerät DR sowie über die Datennah-N und/oder Datenfernverbindung F mit den übrigen Geber-Aktuator-Einheiten, z. B. 19, 20, 21, 23 und 24, einer Schutzzone, z. B. der Sammelschiene D, in Wirkverbindung. Die Wirkverbindung zu den übrigen Geber-Aktuator-Einheiten, z. B. 19, kann direkt über eine Datenverbindung, z. B. N, erfolgen, so dass Einzelmeldungen von der betreffenden Geber-Aktuator-Einheit, z. B. 19, empfangen werden, sie kann aber auch indirekt, z. B. über Datennah N-und/oder Datenfernverbindung F und mindestens eine weitere Geber-Aktuator-Einheit, z. B. 19, 20, erfolgen (vgl. Fig. 2). Die Auswerteeinheit erhält dann von der benachbart angeordneten Geber-Aktuator-Einheit, z. B. 19, Gruppenmeldungen, welche Informationen über den Zustand von Geber-Aktuator-Einheiten, z. B. 20, 21, enthalten, die lediglich über die benachbart angeordnete Geber-Aktuator-Einheit, z. B. 19, mit dem Empfänger EM in Wirkverbindung stehen. Jede der Auswerteeinheiten, z. B. 22D, steht über $V_{CB}$ mit derjenigen Schaltstelle, z. B. 22′, in Wirkverbindung, welche seiner Geber-Aktuator-Einheit, z. B. 22, zugeordnet ist, und über die Datennah- N und/oder Datenverbindungen F direkt oder indirekt mit den übrigen Geber-Aktuator-Einheiten, z. B. 19, 20, 21, 23 und 24, einer Schutzzone, z. B. der Sammelschiene D.

Über die Datennahverbindungen $V_{CB}$ und $V_{DR}$ können folgende binäre Signale übertragen werden:
– Status Schaltstelle (offen/zu, einsatzbereit/nicht einsatzbereit (Diagnose)),
– Status Schutzgeräte DR (funktionsfähig/nicht funktionsfähig (Eigendiagnose)),
– Meldung, ob die Meßstelle unter Spannung steht,

4

– Richtungsentscheid des als Fehlerrichtungsdetektors ausgebildeten Schutzgerätes DR: Fehler in Messorientierung, entgegen der Messorientierung, unentschieden,
– Öffnungsbefehl zur Schaltstelle,
– Vollzugsmeldung der Öffnung der Schaltstelle (ev. Ergänzung durch Schalterreserveschutz),
– von einer Stromüberwachungseinheit SU ausgesandte Meldungen, ob der Strom an der Meßstelle zu Null geworden ist (bei offener Schaltstelle und Strom ungleich Null an der Meßstelle liegt ein einseitig eingespeister Fehler der "toten Zone" vor),
– Einschaltbefehle zur Schaltstelle (Wiedereinschaltung).

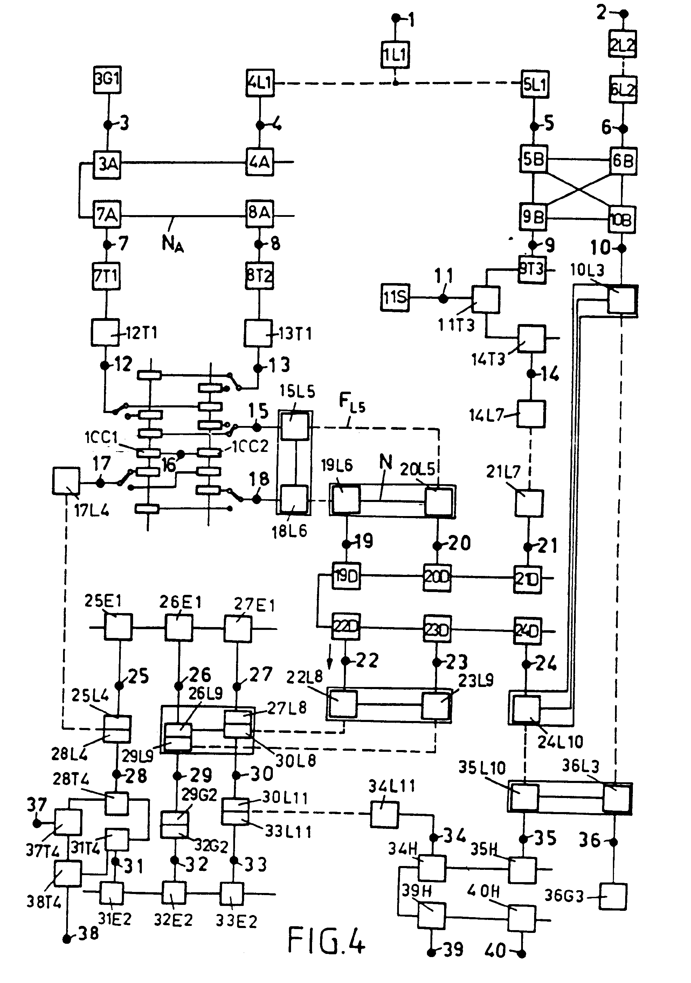

In Fig. 4 ist ein Kommunikationsnetz einer erfindungsgemässen Schutzeinrichtung dargestellt. Dieses Kommunikationsnetz weist weitgehend denselben topologischen Aufbau auf wie das zu schützende Energieverteilungsnetz gemäss Fig. 1. Die Geber-Aktuator-Einheiten sind mit den Bezugsziffern 1, 2, ..., 39, 40 bezeichnet. Jeder Geber-Aktuator-Einheit, z. B. 3, sind genau zwei Auswerteeinheiten, wie z. B. 3G1, 3A zugeordnet. Die Zuordnung erfolgt über Daten-Nahverbindungen zwischen allen Auswerteeinheiten aller Geber-Aktuator-Einheiten, welche auf den Grenzen der Schutzzone eines zu schützenden Objektes angeordnet sind. Ist das zu schützende Objekt beispielsweise die Sammelschiene A, so sind die zugeordneten Auswerteeinheiten 3A, 4A, 7A und 8A untereinander durch Daten-Nahverbindungen verbunden. Entsprechend Fig. 2 sind die die betreffenden Datennahverbindungen auch in Fig. 4 als ausgezogene Linien dargestellt.

Bei der Sammelschiene A liegen die Geber-Aktuator-Einheiten 3, 4, 7 und 8 in einer Unterstation nahe beisammen. Es ist jedoch auch denkbar, dass die Schutzzone bei einer Leitung, einem Kabel oder bei ausgedehnten Schaltanlagen geographisch weit erstreckt ist (Entfernung der Geber-Aktuator-Einheiten voneinander grösser als einige Hundert Meter). An jedem der Enden eines solchen Schutzobjekts, welches eine Freileitung, ein Kabel oder eine ausgedehnte Schaltanlage sein kann, z. B. $L_3$, $L_8$, $L_9$ bzw. $L_{10}$, ist dann eine Auswerteeinheit, z. B. 10L3 und 36L3; 22L8, 27L8 und 30L8; 23L9, 26L9 und 29L9 bzw. 24L10 und 35L10 angeordnet. Die Auswerteeinheiten jedes Objektes arbeiten über Datenfernverbindungen zusammen. Entsprechend Fig. 2 sind die betreffenden Datenfernverbindungen F auch in Fig. 4 gestrichelt dargestellt.

In Fällen, bei denen Fehler zwischen zwei Schutzobjekten auftreten können, z. B. zwischen den Leitungen $L_5$ und $L_6$, $L_8$ und $L_9$ oder $L_{10}$ und $L_3$, müssen sich die zugeordneten Auswerteeinheiten aufeinander abstimmen. Dies ist durch zusätzliche, im allgemeinen als Nahverbindungen ausgebildete Datenverbindungen möglich. Solche Verbindungen sind z. B. zwischen 15L5 und 18L6, 20L5 und 19L6, 22L8 und 23L9, 27L8 und 26L9, 35L10 und 36L3 sowie 24L10 und 10L3 vorgesehen.

Die Datennahverbindungen N können wahlweise als Bussystem oder fest verlegte Leiter (Punkt-Punkt-Verbindung) ausgebildet sein. In Fig. 4 sind z. B. die Auswerteeinheiten 4A, 3A, 7A und 8A mit einem Bussystem, die Auswerteeinheiten 5B, 6B, 9B und 10B hingegen mit Punkt-Punkt-Verbindungen untereinander verbunden. Bei verminderten Ansprüchen an die Redundanz der Datenverbindungen können einzelne Verbindungen zwischen 5B, 6B, 9B und 10B auch fehlen, so dass eine Baumstruktur übrigbleibt, bzw. erst bei Ausfall von Baumzweigen aktiviert werden.

Die Daten-Fernverbindungen F können z. B. Lichtleiter (Polytetrafluoräthylen), Kabeladern, Richtfunk oder TFH-Verbindungen sein.

Es reicht aus, wenn mindestens eine ungesicherte (schnelle) Übertragungsverbindung zur Verfügung steht, da dann im Fehlerfall ein vom Schutzgerät DR ermitteltes Richtungskriterium übertragen werden kann. Sollen jedoch zusätzlich noch Reservefunktionen erfüllt werden, so ist zuszätzlich noch eine gesicherte (langsame) Verbindung zur Übertragung eines direkten oder indirekten Ausschaltbefehles vorzusehen.

Die Datennah- N und Datenfernverbindungen F übertragen folgende Signale:
1) - Alle beteiligten Geber-Aktuator-Einheiten zeigen eine Fehlerrichtung ins Schutzobjekt an (Globalmeldung) oder mindestens eine beteiligte Geber-Aktuator-Einheit zeigt Fehlerrichtung aus dem Schutzobjekt an bzw. ist unentschieden, gestört etc. und/oder
- eine spezifizierte Gruppe innerhalb der beteiligten Geber-Aktuator-Einheiten zeigen eine Fehlerrichtung ins Schutzobjekt an (Gruppenmeldung) oder mindestens eine beteiligte Geber-Aktuator-Einheit aus dieser spezifizierten Gruppe zeigt Fehlerrichtung aus dem Schutzobjekt an bzw. ist unentschieden, gestört etc. Die spezifizierte Gruppe kann für jede Datenverbindung innerhalb der Schutzzone enders sein. Die spezifizierte Gruppe kann auch nur eine Geber-Aktuator-Einheit umfassen (Einzelmeldung).
2) Die unter Punkt 1) beschriebenen Signale können auch in komplementärer oder anderen, aus den Regeln der Booleschen Algebra sich ergebenden Formen dargestellt werden.
3) Totzonen-Erkennungssignale
4) Schalterreserve-Signale
5) Alle von den Datenverbindungen $V_{DR}$ und $V_{CB}$ übertragenen Signale können auch von den Datennah- N und Datenfernverbindungen F entweder einzeln oder in geeigneter Weise vorverarbeiteter Form übertragen werden.

Die in der obigen Aufstellung angegebenen Signale sind ersichtlich binärer Natur.

Die Wirkungsweise der erfindungsmässigen Schutzeinrichtung ist nun wie folgt:

Jede Auswerteeinheit hat die Aufgabe, aufretende Fehler aufgrund der Information des Schutzgerätes DR der zugeordneten Geber-Aktuator-Einheit und der zufliessenden Information der übrigen Geber-Aktuator-Einheiten-einer Schutzzone als innerhalb oder ausserhalb der Schutzzone eines der Objekte liegend zu identifizieren und gegebenenfalls die eigene Schaltstelle auszulösen.

Hierbei sind in jeder Auswerteeinheit zweckmässigerweise Mittel vorgesehen, um bei Schalthandlungen innerhalb der Schutzzone die Auswerteeinheit zu blockieren, da davon auszugehen ist, dass das Schutzgerät DR gegebenenfalls nicht unterscheiden kann, welche Signale von Fehlern und welche von Schalthandlungen herrühren.

Die Auswerteeinheit, z. B. 22D, empfängt die vom zugeordneten Schutzgerät DR und den übrigen, einer Schutzzone, z. B. der Sammelschiene D, zugeordneten Auswerteeinheiten, z. B. 19D, 20D, 21D, 23D, 24D, eintreffenden Signale und verknüpft diese Signale (normale Arbeitsweise der Geber. Aktuator-Einheit mit einem in Fig. 3 durch Richtungspfeile markierten Datenfluss). Sie gibt dann, wenn nach Auswerten aller Richtungssignale der Schutzgeräte DR unter Berücksichtigung der Messorientierung m der Geber-Aktuator-Einheiten den Fehler als innerhalb der gemeinsamen Schutzzone liegend erkannt ist, lokal ein Signal ab, welches die eigene Schaltstelle z. B. 22', öffnet. Entsprechendes gilt für die Auswerteeinheiten 19D, 20D, 21D, 23D und 24D bezüglich der Schaltstellen 19', 20', 21', 23' und 24'. Im Auslösefall wird von jeder Stromüberwachungseinheit SU überwacht, ob die Ströme der Stromwandler CT der zugeordneten Meßstelle nach Ablauf der Eigenzeit der von den betroffenen Geber-Aktuator-Einheiten, z. B. 22, 24, eusgelösten Schaltstellen, z. B. 22', 24', Null geworden sind. Dies ist mit Sicherheit dann der Fall, wenn bei Vernachlässigung einer "toten Zone" zwischen dem Stromwandler der Meßstelle und der Schaltstelle der Fehler innerhalb der betroffenen Schutzzone liegt.

Wie aus Fig. 3 ersichtlich ist, befindet sich bei jeder der Geber-Aktuator-Einheiten, wie z. B. 22, zwischen dem Stromwandler CT der Meßstelle und der Schaltstelle, z. B. 22', eine "tote Zone", durch welche im Fehlerfall des Richtungsrelais DR dieser Geber-Aktuator-Einheit den durch einen gezackten Pfeil dargestellten Fehler, etwa einen Erd- oder Kurzschluss, als entgegengesetzt der Messorientierung m liegend erkennt. Die Geber-Aktuator-Einheit 22 sei nun beispielsweise so angeordnet, dass deren zugeordnete Schaltstelle 22' mit der Sammelschiene D und deren zugeordnete Meßstelle mit der Leitung $L_8$, verbunden ist (Richtungspfeil m der Geber-Aktuator-Einheit 22 in Figur 3). Tritt daher in der zwischen Schalt- und Meßstelle dieser Einheit befindlichen Totzone ein Fehler auf, so erkennen ihn die Auswerteeinheiten 19D, 20D, 21D, 22D, 23D, 24D als innerhalb der von den Schaltstellen 19', 20', 21', 22', 23' und 24' begrenzten Schutzzone und die Auswerteeinheiten 22L8, 27L8 und 30L8 als ausserhalb der von den Schaltstellen 22', 27', 30' begrenzten Schutzzone liegend. Die Auswerteeinheiten 19D, 20D, 21D, 22D, 23D und 24D veranlassen das Offnen der den Geber-Aktuator-Einheiten 19 bis 24 zugeordneten Schaltstellen 19' bis 24' und die Sämmelschiene D wird freigeschaltet, obwohl das verbleibende Netz in der Leitung $L_8$ nach wie vor fehlerbehaftet ist.

Die in der Geber-Aktuator-Einheit 22 vorgesehene Stromüberwachungseinheit SU erkennt jedoch, dass der Fehlerstrom in der Geber-Aktuator-Einheit 22 trotz geöffneter Schaltstelle 22' nicht verschwunden ist, und bildet sodann ein Totzonen-Erkennungssignal $t_1$, welches über eine Datenverbindung $V_{R,t_1}$, die Auswerteeinheit 22D und Datennahverbindungen N nach 23D, 19D usw. auf die übrigen Geber-Aktuator-Einheiten 19, 20, 21, 23 und 24 wirkt, in welchen der Fehlerstrom verschwunden ist. Hierdurch werden die genannten Geber-Aktuator-Einheiten veranlasst, die ihnen zugeordneten Schatstellen 19', 20', 21', 23' und 24' wieder zu schliessen. Die Stromüberwachungseinheit SU in 22 erkennt daher auch, dass der Fehler in der "toten Zone" der eigenen Geber-Aktuator-Einheit liegt und bildet ein weiteres Totzonen-Erkennungssignal $t_2$, welches über eine Datenverbindung $V_{R,t_2}$, die Auswerteeinheit 22L8 und Datenfern- F und Datennahverbindungen N die Auswerteeinheiten 27L8 und 30L8 veranlasst, die den Geber-Aktuator-Einheit 27 und 30 zugeordneten Schaltstellen 27'und 30' zu öffnen, wodurch die Freischaltung der mit der fehlerbehafteten "toten Zone" verbundenen Leitung Lg erreicht wird.

Es ist denkbar, dass bei offener Schaltstelle, z. B. 22', einer Geber-Aktuator-Einheit, z. B. 22, ein Fehler in der "toten Zone" auftritt (vgl. Fig. 3). Der Vorfehlezustand, bei dem ein solcher Fehler auftreten kann, ist gekennzeichnet durch die drei Signale "Schaltstelle offen", "Meßstelle unter Spannung" und "Strom in der Meßstelle gleich Null". Diese drei Signale werden in den beiden Auswerteeinheiten, z. B. 22D und 22L8, der zugeordneten Geber-Aktuator-Einheit, z. B. 22, ausgewertet. In der Auswerteeinheit der in Richtung der Messorientierung m der Geber-Aktuator-Einheit, z. B. 22, liegenden Schutzzone, z. B. derjenigen der Leitung $L_8$, wird nun das Richtungssignal von IR in entgegengesetztem Sinn ausgewertet (Richtungsumkehr) und in der anderen Auswerteeinheit, z. B. 22D, wird dieses Richtungssignal unterdrückt (blockiert).

Ist also beim Auftreten eines Fehlers in der "toten Zone" etwa der Geber-Aktuator-Einheit 22 die zugeordnete Schaltstelle 22′ bereits geöffnet, dann meldet der der Geber-Aktuator-Einheit 22 zugeordnete Fehlerrichtungsdetektor DR, dass in der der Sammelschiene D zugeordneten Schutzzone ein Fehler aufgetreten ist, während die in den Geber-Aktuator-Einheiten 19, 20, 21, 23 und 24 enthaltenen Fehlerrichtungsdetektoren überhaupt keine Fehlerrichtung angeben, da ja die zwischen der Sammelschiene D und damit den Geber-Aktuator-Einheiten 19, 20, 21, 23 und 24 und dem Fehlerort befindliche Schaltstelle 22′ geöffnet ist.

Durch die Blockierung des Richtüngssignales vom Schutzgerät DR in der Aüswereeinheit 22D wird verhindert, dass 19D bis 24D ansprechen können. Eine Inversion desselben Richtungssignales in der Auswerteeinheit 22L8 bewirkt, dass der Fehler als in der Schützzone der Leitung $L_8$ liegend erkannt wird und die Auswereeinheiten 27L8 und 30L8 an ihre Schältstellen 27 und 30 Auslösesignale geben, wodurch die Freischaltung der mit der fehlerbehafteten "toten" Zone verbundenen Leitung $L_8$ erreicht wird.

Mit der erfindungsgemässen C chutzeinrichtung lässt sich auch ein Schalterreserveschutz realisieren. Bei Ausfall der einer Geber-Aktuator-Einheit zugeordneten Schaltstelle erkennt die Stromüberwachungseinheit SU dieser Geber-Aktuator-Einheit, dass im Fehlerfall in der Geber-Aktuator-Einheit der Strom nicht zu Null wird, obwohl die Geber-Aktuator-Einheit den Befehl zum Öffnen der Schaltstelle gebildet hat.

Ist zum Beispiel die Schaltstelle 22′ betroffen und liegt zum Beispiel auf der Leitung $L_8$ ein Fehler vor, so wird der Fehler von den Geber-Aktuator-Einheiten 22, 27 urid 30 erfasst und in den zugeordneten Auswerteeinheiten 22LB, 27L8 und 30L8 ausgewertet. Die Auswerteeinheit 27L8 bzw. 30L8 gibt an 27 bzw. 30 die Auslösebefehle ab, die Schaltstellen 27′ und 30′ zu öffnen. 22L8 gibt an 22 den Auslösebefehl, die Schaltstelle von 22′ zu öffnen. Die Schaltstelle 22′ öffnet jedoch nicht bzw. der Strom im Stromwandler CT von 22 ist nach der Schaltereigenzeit nicht zu Null geworden (unabhängig von der Rückmeldung durch Hilfskontakte des Schalters der Schaltstelle).

Dieses Schalterversagen wird in 22 durch SU erkannt. SU gibt über die Datennahverbindungen $V_{R,t_1}$ bzw. $V_{R,t_2}$ ein Schalterreservesignal R an die Auswerteeinheiten 22D bzw. 22L8 ab. 22D gibt über die Datennahverbindung N an 19, 20, 21, 23, 24 das Schalterreservesignal R weiter, welches zum Auslösen dieser Schalter führt.

Liegt bei defektem Schalter der Geber-Aktuator-Einheit 22 der Fehler auf der Sammelschiene D, so geben die Auswerteeinheiten 19D bis 24D Auslösebefehle an 19 bis 24. Wie vorstehend beschrieben versagt 22 und meldet an 22D und 22L8 sein Versagen. 22L8 gibt entsprechend 22D ein Schalterreserve-Signal ab. 27L8 urid 30L8 lösen nun die Schaltstellen 27′ und 30′ aus.

Die erfindungsmässige Schutzeinrichtung ist insbesondere derart Ansgetridet; dass auch der Ausfall des Schutzgerätes DR und der Stromüberachungseinheit SU einer Geber-Aktuator-Einheit die Schutzfunktion nicht beeinträchtigt. Hierzu ist in jeder der Geber-Aktuator-Einheiten, z. B. 22, eine in Fig. 3 dargestellte Selbstüberwachüngseinheit SW vorgesehen, welche fortlaufend die Funktionsfähigkeit von DR und SU feststellt und an die beiden zugeordneten Auswerteeinheiten, z. B. 22D und 22L8, meldet, wenn sie ausgefallen sind. Ist DR und/oder SU funktionsunfähig, so wird eine zwischen den beiden Auswerteeinheiten, z. B. 22D und 22L8, befindliche Datenverbindung aktiviert (Schaltersymbol S′ in Fig. 3), welche beide Auswerteeinheiten zusammenschaltet, wodurch die Schutzzonen der beiden betroffenen Schutzobjekte, z. B. D und $L_8$, eine gemeinsame Schutzzone bilden. Durch diese Zusammenschaltung der Schutzzonen erübrigt sich eine Verdoppelung des Schutzgerätes DR.

Die Funktionstüchtigkeit der Auswerteeinheiten, z. B. 22D, 22L8, innerhalb einer Geber-Aktuator-Einheit kann durch redundante Anordnung sichergestellt werden (Verdoppelung oder 2 aus 3 Anordnung).

Um die erfindungsgemässe Schutzeinrichtung auch bei Ausfall der Datennah- N und/oder Datenfernverbindung F voll funktionsfähig zu erhalten, ist es zweckmässig, diese Verbindungen in einem redundanten Netz anzuordnen. Ein solches redundantes Netz hätte dann die Eigenschaft, dass bei Unterbrechung einer der Verbindungen das zu übertragende Signal über eine redundante Reserveverbindung an seinen Bestimmungsort gelangt. Wäre z. B. im Kommunikationsnetz gemäss Fig. 4 die Datenfernverbindung von 17L4 nach 25L4 und 28L4 unterbrochen, so könnte der Informationsfluss über eine Reserveleitung, welche von 17L4 über die Fernverbindungen zwischen 15L5 und 20L5 sowie 23L9 und 29L9 nach 25L4 und 28L4 führt, aufrecht erhalten werden.

**Patentansprüche**

1. Schutzeinrichtung für zu schützende Objekte (z.B. D, $L_8$) eines elektrischen Netzes, bei der jeweils eines von mindestens zwei Objekten (z.B. D, $L_8$) jeweils je einer von mindestens zwei aneinander grenzenden Schutzzonen zugeordnet ist, welche Schutzzonen jeweils durch diese Objekte aus dem Netz trennende Schaltstellen (z.B. 19′,...., 24′; 22′, 27′, 30′) bestimmt sind, bei der jeder dieser Schaltstellen (z.B. 22′) eine zumindest den durch diese Schaltstelle (z.B. 22′) fliessenden Strom erfassende und den Status dieser Schaltstelle bestimmende Geber-Aktuator-Einheit (z.B. 22) zugeordnet ist, und bei der jeder (z.B. 22′) der eine Schutzzone bestimmenden Schaltstellen (z.B. 19′,..., 24′) durch die jeweils zugeordnete Geber-Aktuator-Einheit (z.B. 22) ein Öffnungsbefehl erteilt wird, wenn nach logischer Verknüpfung der an diesen Schaltstellen (z.B. 19′,20′,....,24′) ermittelten Richtungssignale in einer von zwei in der Geber-Aktuator-Einheit (z.B. 22) vorgesehenen Auswerteeinheiten (z.B. 22D), welche jeweils je einer der mindestens zwei Schutzzonen zugeordnet sind und welche jeweils mit den der betreffenden Schutzzone zugeordneten Auswerteeinheiten (z.B. 19D, 20D, 21D, 23D, 24D; 27L8, 30L8) über Datennah (N)- und/oder Datenfernverbindungen (F) Kommunizieren festgestellt wird, dass innerhalb dieser einem Schutzzone ein Fehler auftritt, dadurch gekennzeichnet, dass die Auswenteeinheiten jeder Geber-Aktuator-Einheit (z.B. 22) über eine aktivierbare Datenverbindung (Schaltersymbol S′) zuzammenschaltbar sind, und dass ferner jede der Geber-Aktuator-Einheiten (z. B. 22) jeweils eine Selbstüberwachungseinheit (SW) entält, welche jeweils den Ausfall von Komponenten der Geber-Aktuator-Einheit (z. B. 22) wie eines Schutzgerätes (DR) und einer Stromüberwachungseinheit (SU) sowie den Ausfall der Funktionsfähigkeit der zugeordneten Schalstelle (z. B. 22′) den in dieser Geber-Aktuator-Einheit (z. B. 22) enthaltenen beiden Auswerteeinheiten (z. B. 22D, 22L8) meldet, und dass auf Grund dieser Meldung die zwischen den beiden Auswerteeinheiten (z. B. 22D, 22L8) angeordnete Datenverbindung (Schaltersymbol S′) aktiviert wird, welche beide Auswerteeinheiten (z. B. 22D, 22L8) zu einer Einheit zusammenschaltet um eine gemeinsame Schutzzone zu bilden, wobei die zusammengeschattete Einheit mit den verbleibenden Geber-Aktuator-Einheiten (z. B. 19, 20, 21, 23, 24, 27, 30) derjenigen beiden Schutzzonen zusammenwirkt, die den Auswerteeinheiten (z. B. 22D, 22L8) der ausgefallen Geber-Aktuator-Einheit (z. B. 22) zugeordnet sind.

2. Schutzeinrichtung nach Anspruch 1, dadurch gekennzeichnet, dass zwei (z. B. 22D, 20D) einer Schutzzone zugeordnete Auswerteeinheiten (z. B. 19D,..., 24D) einer ersten und einer zweiten Geber-Aktuator-Einheit (z. B. 20, 22) über eine Auswerteeinheit (z. B. 19D) einer dritten Geber-Aktuator-Einheit (z. B. 19) miteinander kommunizieren, wobei die dritte Auswerteeinheit (z. B. 19D) eine ihren eigenen Status sowie den Status einer ersten (z. B. 20D) der beiden Auswerteeinheiten erfassende Sammelmeldung an eine zweite (z. B. 22D) der beiden Auswerteeinheiten sendet.

3. Schutzeinrichtung nach einem der Ansprüche 1 oder 2, dadurch gekennzeichnet, dass die zwei in einer Geber-Aktuator-Einheit (z. B. 22) enthaltenen Auswerteeinheiten (z. B. 22D, 22L8) zwei Datenverbindungen ($V_{DR}$, $V_{CB}$) enthalten, von denen eine erste ($V_{DR}$) zumindest den Status eines Schutzgerätes (DR) innerhalb der Geber-Aktuator-Einheit (z. B. 22) sowie dessen Richtungssignal überträgt, und eine zweite ($V_{CB}$) Signale überträgt, welche zumindest den Status der Schaltstelle (z. B. 22′) sowie Befehle zum Öffnen und Schliessen dieser Schaltstelle (z. B. 22′) betreffen.

4. Schutzeinrichtung nach einem der Ansprüche 1 bis 3, dadurch gekennzeichnet, dass in den Geber-Aktuator-Einheiten (z. B. 22) jeweils eine Stromüberwachungseinheit (SU) vorgesehen ist, welche erkennt, dass der Strom nach Freischaltung eines der Objekte (z. B. D) in dieser die Schutzzone des freigeschalteten Objektes (z. B. D) mitbestimmenden Geber-Aktuator-Einheit (z. B. 22) ungleich Null ist, und welche sodann ein Totzonenerkennungssignal ($t_1$, $t_2$) bildet, welches das Zuschalten des freigeschalteten Objektes (z. B. D) und das Freischalten eines mit dem zugeschalteten Objekt (z. B. D) über eine dieser Geber-Aktuator-Einheit (z. B. 22) zugeordnete Schaltstelle (z. B. 22′) verbindbaren weiteren (z. B. $L_8$) der Objekte bewirkt.

## Claims

1. Protective device for objects to be protected (for example D, $L_8$) of an electric power system, in which device in each case one of at least two objects (for example D, $L_8$) is in each case allocated to one of at least two mutually adjoining protection zones, which protection zones are in each case determined by switching points (for example 19′, ..., 24′; 22′, 27′, 30′) isolating these objects from the power system, in which device each of these switching points (for example 22′) is associated with a transmitter/actuator unit (for example 22) which at least detects the current flowing through this switching point (for example 22′) and determines the status of this switching point, and in which device an opening command is issued by the in each case associated transmitter/actuator unit (for example 22) to each (for example 22′) of the switching points (for example 19′, ..., 24′) determining a protection zone, if after logical combination of the direction signals determined at these switching points (for example 19′, 20′, ..., 24′) it is found in one of two evaluating units (for example 22D), which are in each case allocated to one each of at least two protection zones and which in each case communicate with the evaluating units (for example 19D, 20D, 21D, 23D, 24D; 27L8, 30L8), allocated to the relevant protection zone, via local data links (N) and/or remote data links (F), and which are provided in the transmitter/actuator unit (for example 22), that a fault is occurring inside this one protection zone, characterised in that the evaluating units of each transmitter/actuator unit (for example 22) can be connected together via an activatable data link (switch symbol S′), and that furthermore each of the transmitter/ actuator units (for example 22) in each case contains a self-monitoring device (SW) which in each case reports failure of components of the transmitter/actuator unit (for example 22) such as of a protective device (DR) and of a current-sensing unit (SU) and the failure of the operation capability of the associated switching point (for example 22′) to the two evaluating units (for example 22D, 22L8) contained in this transmitter/actuator unit (for example 22), and that, on the basis of this message, the data link (switch symbol S′) arranged between the two evaluating units (for example 22D, 22L8) is actuated which switches the two evaluating units (for example 22D, 22L8) together to form a unit, in order to form one common protection zone, in which arrangement the connected-together unit operates in conjunction with the remaining transmitter/actuator units (for example 19, 20, 21, 23, 24, 27, 30) of those two protection zones allocated to the evaluating units (for example 22D, 22L8) of the failed transmitter/actuator unit (for example 22).

2. Protective device according to Claim 1, characterised in that two (for example 22D, 20D) evaluating units (for example 19D, ..., 24D) allocated to a protection zone of a first and a second transmitter/ actuator unit (for example 20, 22) communicate with each other via an evaluating unit (for example 19D) of a third transmitter-/actuator unit (for example 19), in which arrangement the third evaluating unit (for example 19D) sends a collective message, which covers its own status and the status of a first one (for example 20D) of the two evaluating units to a second one (for example 22D) of the two evaluating units.

3. Protective device according to one of Claims 1 or 2, characterised in that the two evaluating units (for example 22D, 22L8) contained in a transmitter/actuator unit (for example 22) contain two data links ($V_{DR}$, $V_{CB}$), of which a first one ($V_{DR}$) transmits at least the status of a protection device (DR) within the transmitter/actuator unit (for example 22) and its direction signal, and a second one ($V_{CB}$) transmits signals which concern at least the status of the switching point (for example 22′) and commands for opening and closing this switching point (for example 22′).

4. Protective device according to one of Claims 1 to 3, characterised in that the transmitter/actuator units (for example 22) in each case a current-sensing unit (SU) is provided which recognises that the current, after one of the objects (for example (D) has been isolated, is not equal to zero in this transmitter/actuator unit (for example 22) also determining the protection zone of the isolated object, and which then forms a dead-zone detection signal ($t_1$, $t_2$) which causes the isolated object (for example D) to be connected and another one (for example $L_8$) of the objects, which can be connected to the connected object (for example D) via a switching point (for example 22′) which is associated with this transmitter/actuator unit (for example 22), to be isolated.

## Revendications

1. Dispositif de protection pour des objets à protéger (par exemple D, $L_8$) d'un réseau électrique, dans lequel chaque fois l'un d'au moins deux objets (par exemple D, $L_8$) est associé à l'une d'au moins deux zones de protection adjacentes, qui sont déterminées chacune par les points de commutation (par exemple 19′, ..., 24′; 22′, 27′, 30′) séparant ces objets du réseau, et à chacun de ces points de commutation (par exemple 22′) est associé un élément capteur-actionneur (par exemple 22) détectant au moins le courant passant par ce point de commutation (par exemple 22′) et déterminant l'état de ce point de commutation, et dans lequel les éléments capteurs-actionneurs (par exemple 22) donnent un ordre d'ouverture à leurs points de commutation (par exemple 22′) associés respectifs (par exemple 19′, ..., 24′) d'une zone de protection lorsque, après combinaison logique des signaux de sens déterminés en ces points de commutation (par exemple 19′, ..., 24′), il est établi, dans l'une de deux unités d'évaluation (par exemple 22D) présentes dans l'élément capteur-actionneur (par exemple 22), ces unités étant chaque fois associées à l'une d'au moins deux zones de protection et communicant chacune avec les unités d'évaluation (par exemple 19D, 20D, 21D, 23D, 24D; 27L8, 30L8) associées aux zones de protection concernées par des liaisons de données à courte distance (N) et/ou à longue distance (F), qu'un défaut apparait dans l'une de ces zones de protection, caractérisé en ce que les unités d'évaluation de chaque élément capteur-actionneur (par exemple 22) peuvent être interconnectées par une liaison de données activable (symbole d'interrupteur S′) et que d'autre part, chacun des éléments capteurs-actionneurs (par exemple 22) contient chaque fois une unité d'autosurveillance (SW) qui signale chaque fois aux deux unités d'évaluation (par exemple 22D, 22L8) contenues dans cet élément capteur-actionneur-(par exemple 22) les défaillances de composants de cet élément capteur-actionneur (par exemple 22), comme d'un appareil de protection (DR) et d'une unité de surveillance de courant (SU), ainsi que l'inaptitude à fonctionner du point de commutation associé (par exemple 22′) et que, sur la base de ce message, la liaison de données (symbole d'interrupteur S′) prévue entre les deux unités d'évaluation (par exemple 22D, 22L8) est activée pour interconnecter les deux unités d'évaluation (par exemple 22D, 22L8) en une seule unité, afin de créer une zone de protection commune, cette unité interconnectée coopérant avec les éléments capteurs-actionneurs restants (par exemple 19, 20, 21, 23, 24, 27, 30) de celle des deux zones de protection qui est associée aux unités d'évaluation (par exemple 22D, 22L8) de l'élément capteur-actionneur (par exemple 22) défaillant.

2. Dispositif de protection suivant la revendication 1, caracterisé en ce que deux (par exemple 22D, 20D) des unités d'évaluation (par exemple 19D, ..., 24D) d'un premier et d'un second élément capteur-actionneur (par exemple 20, 22) associées à une zone de protection communiquent l'une avec l'autre par l'intermediaire d'une unité d'évaluation (par exemple 19D) d'un troisième élément capteur-actionneur (par exemple 19), la troisième unité d'évaluation (par exemple 19D) envoyant un message de groupe comprenant son propre état ainsi que celui d'une première (par exemple 20D) des deux unités d'évaluation à une deuxième (par exemple 22D) des deux unités d'évaluation.

3. Dispositif de protection suivant la revendication 1 ou 2, caractérisé en ce que les deux unités d'évaluation (par exemple 22D, 22L8) contenues dans un élément capteur-actionneur (par exemple 22) contiennent deux liaisons de données ($V_{DR}$, $V_{CB}$), dont une première ($V_{DR}$) transmet au moins l'état d'un appareil de protection (DR) se trouvant dans l'élément capteur-actionneur-(par exemple 22) ainsi que son signal de sens et une seconde ($V_{CB}$) transmet des signaux qui ont trait au moins à l'état du point de commutation (par exemple 22′), ainsi que des ordres d'ouverture et de fermeture de ce point de commutation (par exemple 22′).

4. Dispositif de protection suivant l'une quelconque des revendications 1 à 3, caractérisé en ce que chaque élément capteur-actionneur (par exemple 22) comporte une unité de surveillance de courant (SU) qui décèle, après déconnexion d'un des objets (par exemple D), que, dans cet élément capteur-actionneur (par exemple 22) qui est impliqué dans la détermination de la zone de protection de l'objet déconnecté (par exemple D), le courant est différent de zéro, et qui produit alors immédiatement un signal d'identification de zone morte ($t_1$, $t_2$) qui provoque la connexion de l'objet déconnecté (par exemple D) et la déconnexion d'un autre (par exemple $L_8$) des objets pouvant être connecté à l'objet connecté (par exemple D) par l'intermédiaire d'un point de connexion (22′) associé à cet élément capteur-actionneur (22).

FIG.1

FIG.2

FIG.3

FIG.4